# EUROPEAN PATENT APPLICATION

(11) **EP 2 762 947 A1**
(43) Date of publication of application: **06.08.2014**
(21) Application number: 12835925.4
(22) Date of filing: 25.09.2012
(51) Int. Cl.: G02B 26/00, B32B 7/02, B32B 27/00, B60K 35/00, G01D 7/00, G02B 5/30

(54) **VARIABLE COLOR DISPLAY METHOD USING PHASE DIFFERENCE FILM**

(30) Priority: 26.09.2011 JP 2011209059
(71) Applicant: Fujifilm Corporation, Minato-ku Tokyo 106-0031 (JP)
(72) Inventor: AMIMORI Ichiro, Ashigarakami-gun, Kanagawa 258-8577 (JP)
(74) Representative: HOFFMANN EITLE
(86) International application number: PCT/JP2012/074452
(87) International publication number: WO 2013/047459

(57) **Abstract**

The present invention provides a method of displaying, in color, information accompanying rotation in a device having a rotating member, comprising disposing a first polarizing film, a printed film, a retardation film, and a second polarizing film approximately perpendicularly to the direction of the rotational axis of the rotation; with the first polarizing film, retardation film, and second polarizing film being the sequence of disposition; and with one or two films selected from among the first polarizing film, the retardation film, and the second polarizing film being caused to rotate in a manner accompanying rotation of the rotating member. The method of the present invention affords inexpensive installation, maintenance, and use; good energy efficiency; and complex color display in a greater number of colors.

## Description

### Technical Field

The present invention relates to a method for variably displaying, in color, information accompanying rotation in a device having a rotating member. More particularly, the present invention relates to a method for displaying information accompanying rotation by changing the color using a retardation film and a polarizing film.

### Background Art

When a color display is used to display certain information, it is possible to transmit different information by changing the color and the quantity of information that can be displayed increases. Depending on the color, it is possible to impart a sense of quality and enhance the display quality. An eye-catching color such as red can be employed as a warning color or caused to flash to transmit intuitive information. Thus, as color liquid-crystal display devices have become widespread, color displays employing liquid-crystal display devices have recently been applied to displays such as the remote control devices of home electronics and meters.

However, in the course of displaying certain information in color on color liquid-crystal display devices, it has become necessary to essentially increase the cost of the device. Color liquid-crystal display devices require backlights, transistor drives, and additional power circuits. A large amount of power is actually required to use them. In reality, in color liquid-crystal display devices, the light use rate drops in principle to one-third or less and energy efficiency is poor when color filters are employed. Accordingly, for example, in electric automobiles such as plug-in hybrid cars with ranges that are greatly impacted by power consumption, it is impractical to employ color liquid-crystal display devices with high power consumption levels as information displays.

Patent Reference 1 discloses an example of an attempt to achieve a color display without using a liquid-crystal display device in a gauge displaying the amount of fuel in a vehicle or the like in which a colored polarizer is rotated to control color generation and extinction.

Patent Reference 2 discloses a color-producing laminate film in which a refractive index anisotropic polymer film is sandwiched between two polarizing films as a film employing a polarizer for variable color display. However, it is difficult to impart a display that does not change by means of a rotating device with the film described in Patent Reference 2, and it is unsuitable for use in displays such as meters. Further, color displays have essentially been limited to two complementary colors.

### Prior Art References

Patent Reference 1: Japanese Utility Model Application Publication (JIKKO) No. Heisei 3-1765
Patent Reference 2: Japanese Utility Model Application Publication (JIKKO) NO. Heisei 4-6899

### Summary of the Invention

### Problem to Be Solved by the Invention

The problem to be solved by the present invention is that of providing a method for variably displaying, in color, information accompanying rotation in a device having a rotating member in the form of a method affording inexpensive installation, maintenance, and use; good energy efficiency; and complex color display in a greater number of colors.

### Means of Solving the Problem

The present inventors conducted extensive research into solving the above-stated problem. They discovered that by using a retardation film with a printed film, it was possible to solve the above problem. The present invention was devised on that basis.

That is, the present invention provides [1] to [16] below:
[1] A method of displaying, in color, information accompanying rotation in a device having a rotating member,
   comprising disposing a first polarizing film, a printed film, a retardation film, and a second polarizing film approximately perpendicularly to the direction of the rotational axis of the rotation;
   with the first polarizing film, the retardation film, and the second polarizing film being the sequence of disposition; and
   with one or two films selected from among the first polarizing film, the retardation film, and the second polarizing film being caused to rotate in a manner accompanying rotation of the rotating member.
[2] The method according to [1], wherein a polarizing film or retardation film other than the one or two films selected from among the first polarizing film, the retardation film, and the second polarizing film are essentially rendered immobile relative to the rotational axis.
[3] The method according to [1] or [2], wherein the retardation film is a patterned retardation film comprising two or more regions of different birefringence, and/or the first polarizing film and/or the second polarizing film is a patterned polarizing film comprising two or more regions having different transmission axis directions.
[4] The method according to [3], wherein the printed film and the retardation film are integrated, and printing designed to correspond to the pattern of the patterned retardation film is implemented on the patterned retardation film.
[5] The method according to any one of [1] to [4], wherein one or more additional retardation films are disposed between the first polarizing film and the second polarizing film.
[6] The method according to [5], wherein one or more of the one or more additional retardation films is caused to rotate in a manner accompanying rotation of the rotating member.
[7] The method according to any one of [1] to [6], wherein the first polarizing film and the second polarizing film rotate on a plane approximately perpendicular to the direction of the rotational axis of the rotation accompanying rotation of the rotating member.
[8] The method according to any one of [1] to [7], wherein the rotating member is a meter needle.
[9] The method according to any one of [1] to [8], wherein the device comprises an illuminating unit and the sequence of disposition is the first polarizing film, the retardation film, the second polarizing film, and the illuminating unit.
[10] The method according to any one of [1] to [9], comprising adjusting the amount of rotation of one or two from among the first polarizing film, the retardation film, and the second polarizing film that are rotating in a manner accompanying rotation of the rotating member in response to the amount of rotation of the rotating member so that a desired color display is achieved.
[11] A retardation film for use in the method according to any one of [1] to [10].
[12] The film according to [11] comprising a printed layer employed as the printed film.
[13] The film according to [11] or [12], comprising two or more birefringence layers.
[14] The film according to [13], wherein the slow axes of any two of the birefringence layers are mutually offset by 45 degrees in at least one region.
[15] The film according to any one of [11] to [14], wherein one of the birefringence layers has biaxial birefringence.
[16] A device displaying, in color, information accompanying rotation of a rotating member,
comprising a first polarizing film a printed film, a retardation film, and a second polarizing film that are disposed approximately perpendicularly to the direction of the rotational axis of the rotation,;
the sequence of disposition being the first polarizing film, the retardation film, and the second polarizing film;
with one or two selected from among the first polarizing film, the retardation film, and the second polarizing film being capable of rotating in a manner accompanying rotation of the rotating member.

### Effect of the Invention

The present invention provides a method of variably displaying, in color, information accompanying rotation in a device having a rotating member in the form of a method affording inexpensive installation, maintenance, and use; good energy efficiency; and complex color display in a greater number of colors. Based on the method of the present invention, it is possible to display, at approximately triple the backlight use efficiency of a color liquid-crystal display device, a predetermined color or pattern. The method of the present invention makes it possible to employ the motor of the rotating member of the device to also drive rotation causing color change, thereby greatly conserving energy. Additionally, without the limitation to combinations of complementary colors of prior art, it is possible to intuitively display to an observer information of higher display quality by changing the color.

### Brief Description of the Drawings

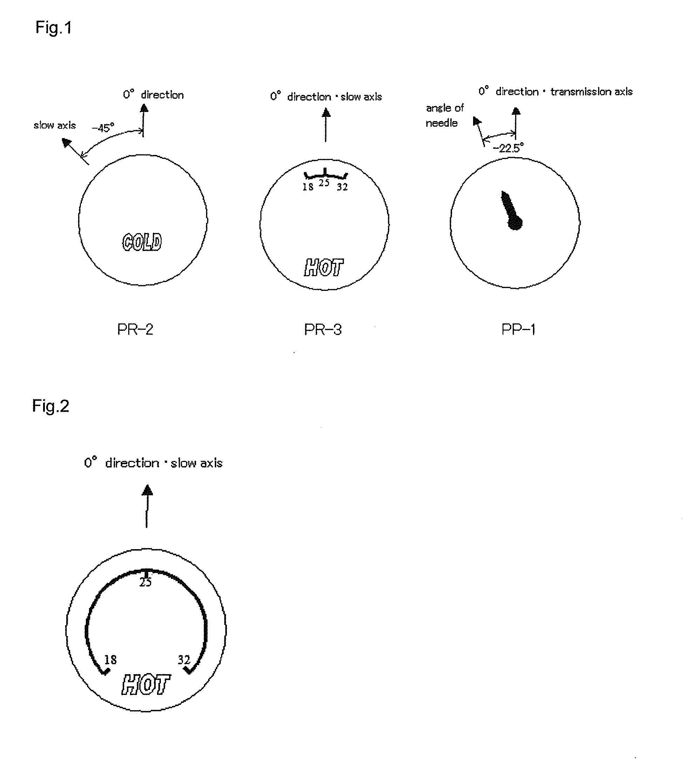

Fig. 1 is a drawing showing the general appearance of the retardation film and polarizing film employed in combination in Example 2.
Fig. 1 is a drawing schematically showing the general appearance of the retardation film employed in Example 4.

### Modes of Carrying Out the Invention

The present invention is described in greater detail below.

In the present Description, the meaning of the word "to" when used in a range of numeric values includes the preceding numeric value and succeeding numeric value as a lower limit and upper limit, respectively.

In the present Description, Re denotes retardation (phase difference). Re can be measured by the spectral retardation method by converting a transmission or reflection spectrum to retardation by the method described in the Journal of the Optical Society of America, Vol. 39, pp. 791-794 (1949), the method described in Japanese Unexamined Patent Publication (KOKAI) No. 2008-256590, or the like. The above references are to measurement methods that employ transmission spectra. In the case of reflection, since the light passes through an optical anisotropic layer twice, half of the retardation converted from the reflection spectrum can be adopted as the retardation of the optically anisotropic layer. Unless specifically stated otherwise, Re refers to frontal retardation. The Re (A) is the retardation measured using light of wavelength A nm. In the present Description, the Re means the retardation measured at wavelengths of 611 ± 5 nm, 545 ± 5 nm, and 435 ± 5 nm for R, G, and B, respectively, and means the retardation measured at a wavelength of 545 ± 5 nm when no reference to color is given.

In the present Description, the term "essentially" with respect to angles means that the error with the strict angle falls within a range of less than ± 5°. The error with respect to the strict angle is desirably less than 4°, preferably less than 3°. The term "essentially" with respect to retardation means a difference in retardation of within ± 5°, inclusive. The phrase "retardation of essentially 0" means that the retardation is not greater than 5 nm. Unless specifically stated otherwise, the refractive index measurement wavelength indicates any wavelength in the visible light region. In the present Description, the term "visible light" refers to light with a wavelength of from 400 to 700 nm.

### [The device having a rotating member]

In the present Description, the term "device having a rotating member" means a device having a rotating part. The device having a rotating member is preferably one having a rotating part in a member that can be confirmed from the exterior, excluding devices having internal rotating members, to achieve the specified function. However, there are cases in which the method of the present invention can be applied by changing rotation by an internal rotation mechanism to rotation that can be confirmed from the exterior and cases in which the method of the present invention can be applied by changing some information within a device by rotation. Examples of rotating members that can be viewed are the fuel gauges and speedometers of vehicles or on the instrument panels of vehicles, the information displays of various electric devices (the control panels of mechanical devices, the temperature displays of air conditioners, and the like), the output adjustments of various electric devices (such as a fan the setting of which can be adjusted by turning), and the display panels of analog watches.

Examples of information accompanying rotation include levels of fuel and the like, speed, electrical output, and temperature.

In the present Description, the term "rotation" desirably refers to rotation such that during use, the axis of rotation as seen by the viewer does not usually move. Rotation can also be continuous rotation in a specific direction (such as clockwise or counterclockwise) about a center in the form of the axis of rotation, or rotation in both directions with a certain angular range about a center in the form of an axis of rotation. However, rotation in both directions with a certain angular range about a center in the form of an axis of rotation is desirable. The range of the rotational speed can be broad, including from 90°/second to 90°/year. The rotation can be continuous or intermittent.

### [The polarizing films]

In the present Description, the polarizing films can be linear polarizing films, round polarizing films, or elliptic polarizing films. The polarizing films can themselves have a birefringence pattern or dichroic pattern. Reference can be made to the description in Japanese Unexamined Patent Publication (KOKAI) No. 2009-193014, for example, for polarizing films having two or more regions with mutually differing absorption axis directions. The first polarizing film and the second polarizing film can be identical, or be separate polarizing filters. Heat resistance and weatherability are desirable in the polarizing films employed in the device. Iodine-doped polarizing films employed in commercial color liquid-crystal display devices are desirable because of their low cost, heat resistance, and weatherability. Dye-doped polarizing films afford particularly good heat resistance and are thus desirable where heat resistance is required, such as in vehicles.

### [The printed film]

In the present Description, the printed film refers to a film that absorbs or scatters some or all visible light rays. The absorption or scattering can be identical over the entire surface, or can be in the form of a pattern. The method used to fabricate the printed film is not specifically limited. It can be fabricated by applying generally known letterpress printing, flexographic printing, gravure printing, offset printing, screen printing, ink-jet printing, xerography, or the like to a film serving as a support. Various inks can be employed. From the perspective of durability, UV ink is desirably employed. The support is desirably in the form of a film having a retardation of 50 nm or less, preferably 20 nm or less. Examples of such supports include unstretched polymer films and the zero birefringence polymer film described by Yasuhiro Koike and Akihiro Tagaya in Photonics Polymers, p. 41, Kyoritsu Shuppan Co., Ltd. (2004).

The printed film can be a printed layer that is integrally provided on a polarizing film or retardation film. The printing is desirably provided so as to make it possible for the polarizing film to achieve a desired display corresponding to a use mode or pattern of a retardation film.

### [The retardation film]

The term "retardation film" means a film having complete or partial birefringence. The retardation of the portion of the retardation film having birefringence can be 10 nm or more, preferably 20 nm or more but not more than 2,000 nm, and most preferably 50 nm or more but not more than 1,000 nm at 20°C. So long all or part of the surface of the retardation film has birefringence, the type of retardation film is not specifically limited. Examples include stretched polymer films, oriented polymer liquid-crystal films, films having a layer in which a reactive liquid-crystal compound has been oriented and fixed, and structural birefringence films based on a grid equal to or less than the wavelength of the light or based on a film with multiple thin layers. The retardation film desirably contains a polymer.

The "polymer" refers to a polymer generally having one or multiple monomer units, and to the extent that the polymer is not specifically differentiated, polymer and plastic are used synonymously. The film comprised of a polymer is stretched to orient the molecular chain, expressing retardation. When specifically referring to a retardation film, one in which the in-plane retardation is controlled is denoted. In the case of a retardation film having full-surface birefringence, one with an in-plane retardation error of 50 nm or less, preferably 20 nm or less, is denoted. In the case of a retardation film having a birefringence pattern, one in which the retardation error within each domain of the pattern is 50 nm or less, preferably 20 nm or less, is denoted. Examples of processes of stretching Roll to Roll films include the method of securing the film by applying suction on conveyor rolls preceding and succeeding the stretching step and varying the rotational speed of preceding and succeeding rolls; the method of holding the two edges of the film with grips called tenters to widen the film in a crosswise direction, and the method of simultaneously conducting both (biaxial stretching). The stretching step is preferably conducted with heating. The heating temperature is preferably higher than or equal to the glass transition temperature but not highter than the softening temperature of the polymer.

The liquid-crystal compound can be a polymer liquid crystal or a reactive liquid crystal of low molecular weight. A rod-like liquid-crystal compound or a discotic liquid-crystal compound is preferable for heat resistance and weatherability. The above composition desirably further comprises at least one liquid-crystal compound having two or more reactive groups in each liquid crystal molecule. In the case of a mixture of two or more liquid-crystal compounds, at least one of them preferably has two or more reactive groups.

As set forth above, when fabricating a patterned retardation film, it suffices to employ a liquid-crystal compound having two or more reactive groups of differing crosslinking mechanisms and to select conditions so that only some portion of the two or more reactive groups polymerizes to prepare an optically anisotropic layer comprising a polymer having an unreacted reactive group. The crosslinking mechanism can be a condensation reaction, hydrogen bonding, polymerization, or the like. Of the two or more mechanisms, at least one is preferably polymerization, and the use of two or more different types of polymerization is preferred. Generally in crosslinking reactions, not just vinyl groups, (meth)acrylate groups, epoxy groups, oxetanyl groups, or vinyl ether groups, but also hydroxyl groups, carboxylic acid groups, amino groups, and the like can be employed. Preferable specific examples of rod-like liquid-crystal compounds are those described in Japanese Unexamined Patent Publication (KOKAI) No. 2009-69793. Heat resistance and weatherability are desirable in the retardation films employed in the device. Polycarbonate films are desirable because they permit ready retardation control and have heat resistance. Oriented fixed films of reactive liquid-crystal compounds are preferable in cases where heat resistance is required, such as when mounted in vehicles.

### [The patterned retardation film]

The retardation film can be a patterned retardation film comprising two or more regions of differing birefringence. Here, the term "differing birefringence" can mean retardation axes with differing orientations or differing magnitudes of retardation.

The method of fabricating the patterned retardation film is not specifically limited. Examples include the method of fabricating multiple retardation film patches of differing birefringence, and the method described in paragraphs [0053] to [0155] in Japanese Unexamined Patent Publication (KOKAI) No. 2009-69793.

### [Biaxial retardation films]

A "biaxial retardation film" denotes a film in which the refractive index varies along three individual axes in the longitudinal, crosswise, and thickness directions of the film. Examples of biaxial retardation films include biaxially stretched films and the special cholesteric liquid-crystal film described in Fujifilm Research & Development, No. 52, pp. 42-46 (2007).

### [Functional layers]

In addition to a layer with a polarizing function, a retardation layer, and a printed layer, respectively, polarizing films, retardation films, and printed films can also contain functional layers such as supports, orientation layers, adhesive layers, and surface protection layers. Examples of supports include cellulose esters (such as cellulose acetate, cellulose propionate, and cellulose butyrate), polyolefins (such as norbornene polymers), poly(meth)acrylic acid esters (such as polymethyl methacrylate), polycarbonates, polyesters, polysulfones, norbornene polymers, and other plastic films; paper; aluminum foil; and fabric. Examples of adhesive layers that can be employed include pressure-sensitive resin layers, photosensitive resin layers, and heat-sensitive resin layers.

### [Methods of providing the film in a device]

In the method of the present invention, the first polarizing film, the printed film, the retardation film, and the second polarizing film are disposed in a manner essentially perpendicular to the axis of rotation on the rotating member of a device on which the color display of information accompanying rotation is desired. When the films are disposed, the sequence of disposition is the first polarizing film, the retardation film, and the second polarizing film. The printed film can be disposed in any position, and multiple printed films can be disposed. For example, multiple printed films can be disposed in the form of printed layers provided on two or more selected from among the first polarizing film, the retardation film, and the second polarizing film.

One or two films selected from among the first polarizing film, the retardation film, and the second polarizing film are mounted on the device having a rotating member so as to rotate in a manner accompanying rotation of the rotating member. The term "in a manner accompanying rotation of the rotating member" includes rotating simultaneously with rotation of the rotating member at the same angle of rotation, and rotating simultaneously with rotation of the rotating member of the device at an angle of rotation achieved by varying the angle of rotation from the rotation of the rotating member of the device by a certain ratio with a gear or the like. The direction of rotation of the film preferably lies on a plane approximately perpendicular to the direction of the rotational axis of the above rotation. An embodiment in which the rotation of the film is centered on the rotational axis of the rotating member of the device is preferable.

The amount of rotation of the one or two films that rotate desirably falls within a range of 0° to 360°, 0° to 270°, 0° to 180°, 0° to 90°, or the like, and preferably falls within a range of 0° to 90°. When the rotating member of the device undergoes an amount of rotation exceeding 90° or 360°, rotating over a range that is undesirable on the display, or rotating over a narrow range that is difficult to recognize, as set forth above, it suffices to use a gear or the like to adjust the amount of rotation of the films to within the above-stated range. The amount by which the rotation is adjusted is preferably an amount such that the ratio of the amount of rotation of the rotating member of the device to the amount of rotation of the film falls within a range of about 6:1 to 1:6.

The film other than the one or two films that are rotated in a manner accompanying rotation of the rotating member among the first polarizing film, the retardation film, and the second polarizing film is preferably not caused to rotate in a manner accompanying rotation of the rotating member, and preferably remains essentially immobile relative to the axis of rotation of the rotating member of the device.

A hole can be formed at the position of the rotational axis in the first polarizing film, the retardation film, and the second polarizing film. Those that are caused to rotate can be mounted on a rotating shaft. The film that is not caused to rotate can be controlled by securing to an outer frame. The films are preferably spaced apart so that they do not rub when rotating. However, excessive spacing results in a parallax. Thus, the spacing is preferably 0.01 to 2 mm, more preferably 0.01 to 1 mm. The amount of rotation of the rotating member of the device and the amount of rotation of the films can be identical or different. When employed in a mode in which the rotation differs, it is possible to use a gear or the like to adjust the amount of rotation. The type of the gear is not particularly limited. The axis of rotation of the rotating member of the device and the axis of rotation of the rotating films can be identical or different. When employing a gear, as well, the rotations of differing amounts of rotation can have identical or different axes of rotation.

In color display by the method of the present invention, an illuminating unit such as a backlight in a color liquid crystal display device is not specifically required. Ambient light, or light in the form of ambient light reflecting off the rear surface of the film can be utilized. When the device having a rotating member has an illuminating unit on the rotating member, the illuminating unit, as viewed from the observation side, can be disposed on the opposite side from the first polarizing film, printed film, retardation film, and second polarizing film and used for color display. An example of such an illuminating unit is the backlight of the monitor portion displaying the fuel or speed in a vehicle or the like. The type of illuminating unit is not specifically limited. For coloration, white is preferable. Examples of light sources include halogen lamps, xenon lamps, fluorescent lamps, LEDs, inorganic ELs, and organic ELs. To control the shape of the light source, a light guide plate or a diffuser panel for achieving a surface light source or various lenses can be employed in combination. From the perspective of power consumption, LEDs are preferable. A direct type in which a diffuser panel is positioned on an LED array is preferable.

### Examples

The present invention is described in greater detail below through Examples. The materials, reagents, substance quantities, ratios thereof, operations, and the like that are indicated in the Examples below can be suitably modified within the scope and spirit of the present invention. Accordingly, the scope of the present invention is not limited to the specific examples given below.

### [Fabrication of retardation films]

A commercial unstretched polycarbonate film (PURE-ACE, manufactured by Teijin Ltd.) with a thickness of about 100 µm, an in-plane retardation of about 8 nm, and a glass transition temperature of about 156°C, was monoaxially stretched at 180°C to obtain a retardation film R-1 with a retardation of 420 nm and a retardation film R-2 with a retardation of 650 nm.

A solution of commercial polymethyl methacrylate (average Mw: 350,000, manufactured by Sigma-Aldrich Corporation) dissolved to 30 weight% in MEK was cast with an applicator on a glass sheet to 400 µm/m² and dried, yielding an acrylic film 90 µm in thickness. This film was biaxially stretched at 230°C, yielding a biaxial retardation film R-3 with a frontal surface Re of 420 nm and an Rth of 0 nm.

HLC-5618, manufactured by Sanritz (Ltd.), was employed as a polarizing film in the Examples below.

### [Example 1, Comparative Example 1]

A printed retardation film PR-1 was fabricated by using a UV ink jet printer (Luxel Jet UV 350 GTW, manufactured by Fuji Film (Ltd.)) to print green over the entire surface of R-1. The element of Example 1 was fabricated by sequentially disposing, from the light source side, secured polarizing film P-1, PR-1, and rotating polarizing film P-2. The element of Comparative Example 1 was fabricated employing R-1 in place of PR-1. The angle of each film was indicated with vertical as 0 degrees and the counterclockwise direction as positive. The films were disposed so that the transmission axis of P-1 was at 0 degrees and the retardation axis of PR-1 was at 45 degrees. Table 1 shows the color change effects of these elements along with the transmission axis angle of P-2. A blue-red color change combination was possible in Example 1, but since color complementarity was required in Comparative Example 1, in principal only a blue-yellow combination was possible.

**Table 1**

| | PR-1 | Arrangement 1 | | Arrangement 2 | |
|---|---|---|---|---|---|
| | Angle | Angle | Color | Angle | Color |
| Example 1 | 45° | 0° | blue | 90° | red |
| Comparative Example 1 | 45° | 0° | blue | 90° | yellow |

### [Example 2]

A retardation film PR-2 having a cut-out pattern as COLD on part of R-1 was fabricated by using a cutting block. A cut-out pattern as HOT was applied to R-2 in the same manner, on which a memory display was printed with a UV ink-jet printer (Luxel Jet UV 350 GTW, manufactured by Fuji Film (Ltd.)) to fabricate a retardation film PR-3. A meter needle was printed on the polarizing film with a UV ink-jet printer (LuxelJet UV 350 GTW, manufactured by Fuji Film (Ltd.)) in the -22.5° direction to fabricate a polarizing film PP-1. A schematic of PR-2, PR-3, and PP-1 is shown in Fig. 1.

The meter of Example 2 was prepared with these films disposed, from the light source side, in the sequence rotating polarizing film P-3, PR-2, PR-3, and printed rotating polarizing film PP-1. The transmission axes of P-3 and PP-1 were aligned and the two were made to be simultaneously rotated. Table 2 shows the color change effects of this element with the angle of PP-1. The meter needle moved as PP-1 rotated, indicating more than just the temperature. The word COLD also changed to HOT and the color simultaneously changed continuously from blue to orange.

**Table 2**

| | Arrangement 1 | | Arrangement 2 | |
|---|---|---|---|---|
| | Angle | Appearance | Angle | Appearance |
| Example 2 | 0° | 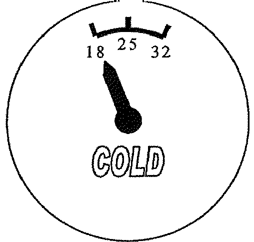 | 45° | 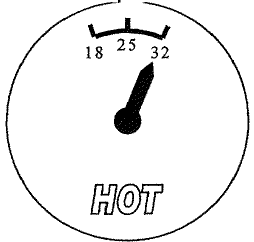 |
| | | Background: blue | | Background: orange |
| | | COLD: white | | HOT: white |

### [Example 3]

The element of Example 3 was fabricated employing R-3 instead of R-1 in Example 1. Figure 3 shows the results of observation of the color changes due to viewing angle when observing the elements of Examples 1 and 3 diagonally from the side and diagonally from the upper left. From the upper left, the blue of Arrangement 1 in Example 1 became colorless and the red of Arrangement 2 turned to purple. In Example 3, almost no change in color was observed at any viewing angle.

**Table 3**

| | PR-1 Angle | | Arrangement 1 | | Arrangement 2 | |
|---|---|---|---|---|---|---|
| | | | Angle | Color | Angle | Color |
| Example 3 | 45° | front | 0° | blue | 90° | red |
| | | side | | blue | | red |
| | | upper left | | blue | | red |
| Example 1 | 45° | front | 0° | blue | 90° | red |
| | | side | | blue | | red |
| | | upper left | | no color | | purple |

### [Example 4]

PR-4 was fabricated in the same manner as PR-3 above with the exception that the meter display printing was changed as indicated in Figure 2. From the light source side, the films were disposed in the sequence rotating polarizing film P-3, PR-2, PR-4, and rotating polarizing film P-3 to prepare another meter needle unit. PR-4 was adjusted to align with the rotational axis of the meter needle so that the meter display printing of PR-4 matched the meter needle display. Viewed from the light source side, the meter needle was disposed on the oppsite side of the film arrangement (the above four films). The meter of Example 4 was fabricated using a planetary gear train that reduced the rotational angle to one-sixth the rotational angle of the meter needle to cause the two polarizing films to turn along the same rotational axis and simultaneously with the meter needle. In the meter of Example 2, rotation of the meter needle was limited to a small range of 45°. However, in the meter of the present Example, rotation of 270° was possible, yielding a display the value of which could be easily read (Table 4).

**Table 4**

| | Arrangement 1 | | Arrangement 2 | |
|---|---|---|---|---|
| | Angle | Appearance | Angle | Appearance |
| Example 4 | 0° | 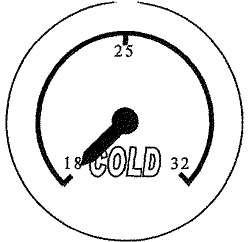 | 45° | 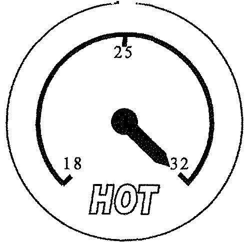 |
| | | Background: blue | | Background: orange |
| | | COLD: white | | HOT: white |

## Claims

1. A method of displaying, in color, information accompanying rotation in a device having a rotating member,
comprising disposing a first polarizing film, a printed film, a retardation film, and a second polarizing film approximately perpendicularly to the direction of the rotational axis of the rotation;
with the first polarizing film, the retardation film, and the second polarizing film being the sequence of disposition; and
with one or two films selected from among the first polarizing film, the retardation film, and the second polarizing film being caused to rotate in a manner accompanying rotation of the rotating member.

2. The method according to claim 1, wherein a polarizing film or retardation film other than the one or two films selected from among the first polarizing film, the retardation film, and the second polarizing film are essentially rendered immobile relative to the rotational axis.

3. The method according to claim 1 or 2, wherein the retardation film is a patterned retardation film comprising two or more regions of different birefringence, and/or the first polarizing film and/or the second polarizing film is a patterned polarizing film comprising two or more regions having different transmission axis directions.

4. The method according to claim 3, wherein the printed film and the retardation film are integrated, and printing designed to correspond to the pattern of the patterned retardation film is implemented on the patterned retardation film.

5. The method according to any one of claims 1 to 4, wherein one or more additional retardation films are disposed between the first polarizing film and the second polarizing film.

6. The method according to claim 5, wherein one or more of the one or more additional retardation films is caused to rotate in a manner accompanying rotation of the rotating member.

7. The method according to any one of claims 1 to 6, wherein the first polarizing film and the second polarizing film rotate on a plane approximately perpendicular to the direction of the rotational axis of the rotation accompanying rotation of the rotating member.

8. The method according to any one of claims 1 to 7, wherein the rotating member is a meter needle.

9. The method according to any one of claims 1 to 8, wherein the device comprises an illuminating unit and the sequence of disposition is the first polarizing film, the retardation film, the second polarizing film, and the illuminating unit.

10. The method according to any one of claims 1 to 9, comprising adjusting the amount of rotation of one or two from among the first polarizing film, the retardation film, and the second polarizing film that are rotating in a manner accompanying rotation of the rotating member in response to the amount of rotation of the rotating member so that a desired color display is achieved.

11. A retardation film for use in the method according to any one of claims 1 to 10.

12. The film according to claim 11 comprising a printed layer employed as the printed film.

13. The film according to claim 11 or 12, comprising two or more birefringence layers.

14. The film according to claim 13, wherein the slow axes of any two of the birefringence layers are mutually offset by 45 degrees in at least one region.

15. The film according to any one of claims 11 to 14, wherein one of the birefringence layers has biaxial birefringence.

16. A device displaying, in color, information accompanying rotation of a rotating member,
comprising a first polarizing film a printed film, a retardation film, and a second polarizing film that are disposed approximately perpendicularly to the direction of the rotational axis of the rotation,;
the sequence of disposition being the first polarizing film, the retardation film, and the second polarizing film;
with one or two selected from among the first polarizing film, the retardation film, and the second polarizing film being capable of rotating in a manner accompanying rotation of the rotating member.
